# FASCICULE DE BREVET EUROPEEN

(11) **EP 1 468 296 B1**
(45) Date de publication et mention de la délivrance du brevet: **06.03.2013**
(21) Numéro de dépôt: 03715026.5
(22) Date de dépôt: 20.01.2003
(51) Int. Cl.: G01P 1/02, G01P 3/44, B64C 25/36, B60C 23/04, G01D 21/02, H01R 27/02, H01R 29/00

(54) **ENSEMBLE A ROUE EQUIPE D'UN TACHYMETRE**
RADEINHEIT MIT GESCHWINDIGKEITSAUFNEHMER
WHEEL ASSEMBLY EQUIPPED WITH A TACHOMETER

(30) Priorité: 21.01.2002 FR 0200715
(43) Date de publication de la demande: 20.10.2004
(73) Titulaire: MESSIER-BUGATTI, 78140 Vélizy Villacoublay (FR)
(72) Inventeur: PRADIER, Jean-Clair, F-78800 HOUILLES (FR)
(74) Mandataire: Blot, Philippe Robert Emile
(86) Numéro de dépôt international: PCT/FR2003/000173
(87) Numéro de publication internationale: WO 2003/062833

(56) Documents cités:
- DE-A- 2 045 917
- DE-A- 4 125 695
- DE-A1- 2 244 948
- GB-A- 2 137 040
- US-A- 3 783 316

## Description

La présente invention concerne un ensemble a roue selon le preambule de la revendication 1.

Il est connu sur les avions de prévoir, dans chaque fusée de roue, un tachymètre permettant de déterminer la vitesse de rotation de la roue de l'avion, notamment lors des phases de roulage sur la piste d'envol.

DE 41 25 695 A, DE 22 44 948 A1 et US 3 783 316 A décrivent de tels équipements de mesure de la vitesse angulaire de rotation d'une roue de véhicule comportant un tachymètre.

En outre, il est connu de prévoir sur les roues des dispositifs de détection de la pression des pneumatiques. Ces dispositifs doivent être associés à des moyens de transmission d'informations entre la roue et le moyeu sur lequel la roue est montée rotative.

Ces moyens de transmission d'informations comportent généralement deux organes complémentaires d'émission et de réception disposés en regard. L'un est solidarisé au capot de roue sensiblement suivant l'axe de rotation et l'autre est solidarisé à la fusée de roue, au voisinage de l'axe de rotation de la roue.

Ainsi, l'un des organes de transmission d'informations est disposé dans la fusée de roue au voisinage du tachymètre.

Le tachymètre et l'organe de transmission d'informations solidaire de la fusée de roue comportent chacun un connecteur permettant leur liaison filaire à un faisceau de câbles cheminant jusqu'au poste de pilotage de l'avion.

Pour certains types d'avion, notamment des avions d'affaires, l'espace disponible dans la fusée pour le tachymètre et l'organe de transmission d'informations est très réduit.

Ainsi, pour permettre la connexion du faisceau de câbles aux deux connecteurs, les deux connecteurs doivent être disposés successivement suivant l'axe de la fusée. L'un des connecteurs est alors porté à l'extrémité d'un bras de support solidaire du tachymètre. Ce bras est relativement long. Il est donc fragile et est une source de vibrations.

L'invention a pour but de proposer un tachymètre et un organe de transmission d'informations, qui puissent être installés facilement dans un moyeu et qui soient peu encombrants.

A cet effet, l'invention a pour objet un ensemble , du type précité, caractérisé en ce que ledit connecteur du tachymètre comporte des bornes de connexion supplémentaires auxquelles est relié ledit organe de transmission d'informations pour la transmission desdites informations, et que lesdites informations transmises par l'organe de transmission d'informations sont différentes de la première information qui représente la pression mesurée par le capteur de pression.

Suivant des modes particuliers de réalisation, l'ensemble comporte l'une ou plusieurs des caractéristiques suivantes :
- l'organe de transmission d'informations est solidarisé au tachymètre pour former un module unitaire, et il comporte des moyens de fixation du module unitaire à la fusée de roue ;
- lesdits moyens de fixation du module unitaire à la fusée de roue comportent une cloche adaptée pour être engagée dans la fusée de roue, et le tachymètre et l'organe de transmission d'informations sont reliés à ladite cloche ;
- le stator du tachymètre comporte au moins un conduit de passage de conducteurs assurant la liaison de l'organe de transmission d'informations aux bornes de connexion du connecteur ;
- il comporte un tube rapporté blindé de protection mécanique et électromagnétique de conducteurs assurant la liaison de l'organe de transmission déformations aux bornes de connexion du connecteur, lequel tube s'étend généralement le long du stator.

L'invention a également pour objet un ensemble à roue comportant une roue de véhicule, une fusée de roue portant la roue et un équipement de mesure de la vitesse de rotation de la roue tel que défini ci-dessus.

L'invention sera mieux comprise à la lecture de la description qui va suivre, donnée uniquement à titre d'exemple et faite en se référant aux dessins, sur lesquels :
- la figure 1 est une vue en coupe longitudinale d'un ensemble à roue selon l'invention, le pneumatique n'ayant pas été représenté ;
- la figure 2 est une vue à plus grande échelle de l'équipement de mesure de la vitesse représenté seul ; et
- la figure 3 est une vue en coupe longitudinale du tachymètre représenté seul.

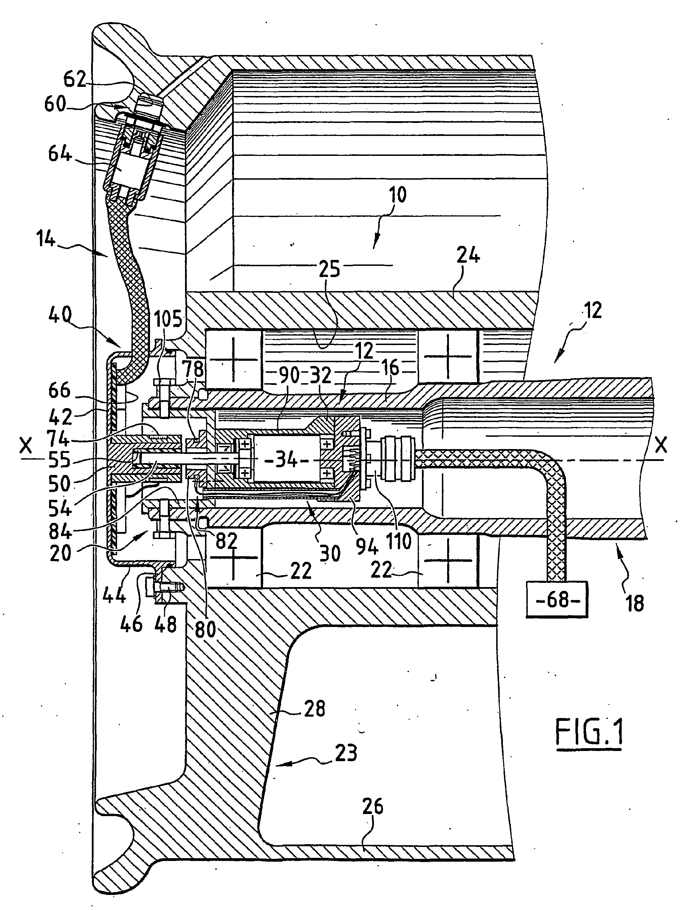

L'ensemble à roue 10 représenté sur la figure 1 fait partie du train d'atterrissage d'un avion. Il comporte une fusée 12 de train d'atterrissage constituant une partie fixe et une roue 14 montée rotative autour de l'axe X-X de la fusée.

La fusée 12 présente un corps creux 16 de forme générale tubulaire d'axe X-X. Le corps 16 est relié à une extrémité 18 au reste de la structure du train d'atterrissage. L'autre extrémité, notée 20, du corps 16 forme une extrémité libre de la fusée.

La roue 14 est montée rotative autour de la fusée 12 par l'intermédiaire de deux roulements à rouleaux 22 espacés suivant l'axe de la fusée.

La roue 14 comporte une jante 23 sur laquelle est monté un pneumatique non représenté. La jante 23 comporte un moyeu 24 traversé de part en part par un passage 25 dans lequel s'étendent la fusée 12 et les deux roulements 22.

La jante 23 comporte en outre une couronne extérieure 26 de support du pneumatique. Le moyeu 24 et la couronne 26 sont reliés l'un à l'autre par des bras radiaux 28 séparés les uns des autres par des ouies de ventilation.

A l'intérieur de la fusée 12 est disposé un tachymètre 30 destiné au suivi de la rotation de la roue. Ce tachymètre comporte un stator 32 solidaire de la fusée 12 et un rotor 34 mobile en rotation par rapport au stator.

Ce rotor mobile est solidarisé en rotation à la roue 14 par exemple par une coupelle 40 formant capot rapportée sur la jante 23 suivant l'axe de celle-ci. La coupelle 40 présente un fond 42 entouré d'une paroi latérale 44 généralement cylindrique. Cette dernière présente, à son extrémité ouverte, une collerette périphérique extérieure 46 permettant la liaison de la coupelle 40 à la jante 23, par l'intermédiaire de vis 48.

L'axe de la coupelle 40 s'étend généralement suivant l'axe X-X de rotation de la roue. La coupelle 40 comporte une douille axiale 50 tournée vers la fusée. Cette douille présente un trou 52 propre à recevoir un arbre 54 s'étendant suivant l'axe X-X. Cet arbre 54 est solidaire en rotation du rotor 34 du tachymètre.

Un manchon élastique 55 disposé dans le trou 52 est interposé entre la douille 50 et l'arbre 54. Le manchon 55 assure l'entraînement en rotation de l'arbre 54 à partir de la douille 50 tout en compensant les éventuels décalages axiaux. Les liaisons entre le manchon 55 et la douille 50, d'une part, et l'arbre 54, d'autre part, sont assurées par frottement.

Un capteur de pression 60 est monté sur la roue. A cet effet, et comme connu en soi, la couronne 26 de la roue est munie d'un logement 62 dans lequel est reçue une sonde de pression 64 adaptée pour mesurer la pression à l'intérieur du pneumatique de la roue. Le capteur 60 comporte en outre un module 66 de traitement du signal et de pilotage de la sonde. Ce module est relié à la sonde 64.

Le module 66 est formé sur un circuit imprimé solidarisé au fond de la coupelle 40 autour de la douille 50.

Une unité de traitement d'informations 68 est solidarisée à la partie fixe du train d'atterrissage ou au corps de l'avion. Elle est adaptée pour l'exploitation et notamment l'affichage des mesures de pression effectuées par le capteur 60.

Le capteur 60 et l'unité de traitement d'informations 68 sont reliés l'un à l'autre par des moyens de communication d'informations désignés par la référence générale 70. Ces moyens de communication sont adaptés pour établir une transmission, par exemple radiofréquence, entre le capteur 60 et l'unité de traitement d'informations 68. Cette transmission est bidirectionnelle, c'est-à-dire que chaque entité peut adresser et recevoir des informations.

Ces moyens de communication sont adaptés également pour transmettre, par voie hertzienne, l'énergie électrique nécessaire au fonctionnement du capteur 60.

Plus précisément, les moyens de communication 70 comportent un bobinage tournant 74 solidaire de la roue. Ce bobinage est porté par la coupelle 40 et est disposé suivant l'axe X-X autour de la douille 50.

De manière analogue, les moyens de communication 70 comportent un bobinage fixe 78 solidaire en rotation de la fusée 12.

Les bobinages 74 et 78 sont disposés en regard de manière à établir une communication hertzienne entre les parties mobile et fixe de l'ensemble à roue.

Le bobinage fixe 78 est porté par un manchon de support 80 engagé autour de l'arbre 54. Le manchon 80 est solidarisé en rotation au corps 32 du tachymètre. L'arbre 54 est libre de tourner au travers du manchon 80.

Le manchon 80 et le bobinage fixe 78 forment ensemble un organe de transmission d'informations 82 solidarisé à la fusée 12 et disposé à l'intérieur de celle-ci. Le tachymètre 30 et l'organe de transmission d'informations 82 sont tous deux portés par une même cloche de support 84 assurant leur liaison à la fusée 12.

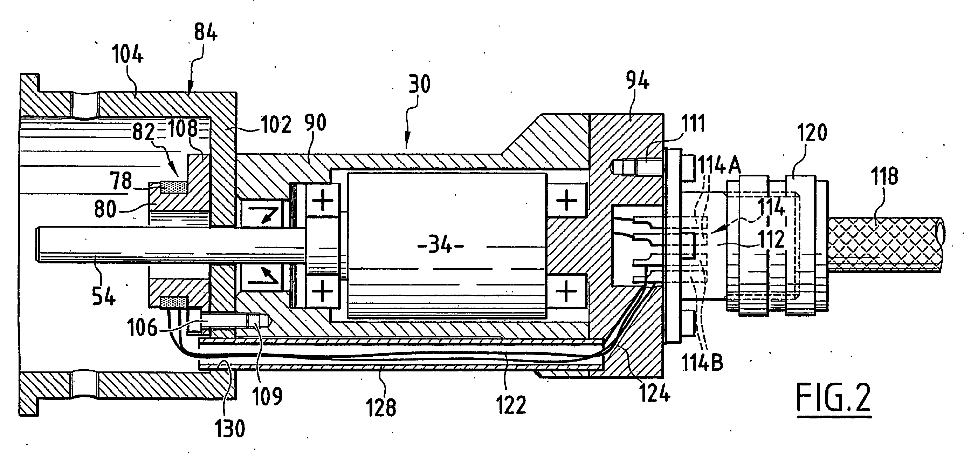

Plus précisément, et comme illustré sur la figure 2, le stator du tachymètre 30 présente un corps 90 de forme générale cylindrique à l'intérieur duquel est monté mobile en rotation le rotor 34. Ce dernier est prolongé par l'arbre 54 au-delà d'une extrémité avant du corps 90. Le corps 90 est obturé à son extrémité arrière opposée à celle où le rotor 34 est relié à l'arbre 54 par un couvercle d'extrémité 94. Le corps 90 est solidaire de la cloche de support 84 depuis son extrémité avant.

Cette cloche 84 présente un fond plat 102 au centre duquel est ménagé un passage pour l'arbre 54. Le fond 102 est bordé par une jupe périphérique 104 cylindrique dont le diamètre extérieur correspond au diamètre intérieur de la fusée 12.

L'organe de communication 86 constitué du manchon 80 et du bobinage fixe 78 est disposé à l'intérieur de la cloche 84 et est maintenu sur le fond de celle-ci par exemple par des vis 106 engagées au travers d'une collerette 108 venue de matière avec le manchon. Ces vis traversent le fond 102 de la cloche et sont reçues dans des trous borgnes taraudés 109 du boîtier.

Le tachymètre 30 comporte un connecteur 110 solidarisé par des vis 111 au couvercle arrière 94. Ce connecteur 110 comporte un corps 112 et un ensemble de bornes de connexion 114 portées par le corps. Le connecteur est adapté pour la liaison électrique à un câble de connexion 118 équipé, à son extrémité, d'un connecteur complémentaire 120 propre à coopérer avec le connecteur 110 et adapté pour relier chaque borne 114 de celui-ci à des fils conducteurs indépendants du câble 118.

Certaines des bornes 114A du connecteur sont reliées aux éléments fonctionnels de détection du tachymètre 30.

D'autres bornes 114B du connecteur sont reliées par des fils conducteurs 122 au bobinage fixe 78 de l'organe de transmission d'informations. Ces fils 122 traversent le corps 90 et le couvercle 94 par un conduit 124 débouchant à l'arrière du connecteur 110. Ce conduit 124 est prolongé par un tube blindé 128 s'étendant partiellement au travers du boîtier 90 et partiellement le long de celui-ci. Le tube 128 s'étend suivant l'essentiel de la longueur du stator 32 du tachymètre. Il s'achève à une extrémité ouverte au travers d'un orifice 130 ménagé dans le fond 102 de la cloche afin de permettre le passage des fils 122.

Le tube est de préférence réalisé en métal pour fournir une protection mécanique et électromagnétique. Il peut également être réalisé en matériau isolant résistant mécaniquement recouvert d'une couche de métallisation.

Le tube 128 étant blindé et mis à la masse, il permet la protection électromagnétique des signaux issus de et allant vers l'organe de transmission d'informations 82 par rapport aux signaux générés par le tachymètre, ce qui garantit une parfaite intégrité des signaux du tachymètre et de l'organe de transmission d'informations 82.

Ainsi, les éléments fonctionnels à la fois du tachymètre 30 et de l'organe de transmission d'informations 82 sont reliées par des conducteurs électriques aux bornes 114 du même connecteur 110.

Dans ces conditions, on comprend que l'équipement de mesure de la vitesse constitué du tachymètre 30 et de l'organe de transmission d'informations 82 et de ma cloche 84 peut être monté simplement d'une seule pièce dans la fusée de roue 12 et que cet équipement peut être facilement connecté par mise en place de seulement un connecteur complémentaire 120 rapporté sur le connecteur 110.

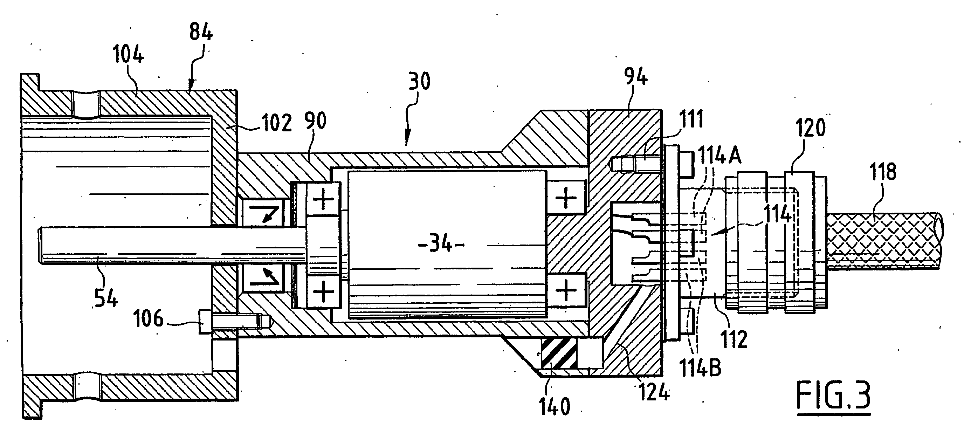

En outre, et comme illustré sur la figure 3, le tachymètre 30 peut, sans modification, être utilisé dans un agencement à roues dépourvu de moyen de transmission d'informations pour la transmission d'une information de pression.

Dans ce cas, le tachymètre 30 est solidarisé à la cloche de support 84 mais l'organe de transmission d'informations 82 n'est pas solidarisé à la cloche. De plus, le tube 128 est absent et le conduit 124 est obturé par un bouchon 140. Le même connecteur 110 est conservé. Toutefois, les bornes 114B ne sont pas reliées à des fils conducteurs ou ces bornes sont mêmes supprimées.

On conçoit ainsi que le même tachymètre peut être utilisé dans plusieurs contextes, avec ou sans organe de transmission d'informations associé. Ainsi, le coût de fabrication unitaire du tachymètre est réduit, du fait du volume important de production.

## Revendications

1. Ensemble à roue comportant une roue de véhicule (14) un capteur de pression étant monté sur la roue, une fusée de roue (12) Portant la roue (14) et un équipement de mesure de la vitesse de rotation de la roue comportant un tachymètre (30) ayant un, stator (32) solidarisé à la fusée de roue (12), un rotor (34) entraîné en rotation par la roue (14) et un connecteur (110) solidaire du stator (32) pour la connexion électrique du tachymètre, lequel connecteur (110) comporte un ensemble de bornes de connexion (114A), l'équipement comportant en outre un organe de transmission d'informations (82) porté par le stator (32) du tachymètre et propre à coopérer avec un organe de transmission d'informations complémentaire (74) solidaire en rotation de la roue (14), **caractérisé en ce que** ledit connecteur du tachymètre (110) comporte des bornes de connexion supplémentaires (114B) auxquelles est relié ledit organe de transmission d'informations (82) pour la transmission desdites informations, et que lesdites informations transmises par l'organe de transmission d'informations (82) sont une information de pression qui représente la pression mesurée par le capteur de pression.

2. Ensemble selon la revendication 1, **caractérisé en ce que** l'organe de transmission d'informations (82) est solidarisé au tachymètre (30) pour former un module unitaire, et **en ce qu'**il comporte des moyens (84, 105) de fixation du module unitaire à la fusée de roue (12).

3. Ensemble selon la revendication 2, **caractérisé en ce que** lesdits moyens de fixation du module unitaire à la fusée de roue comportent une cloche (84) adaptée pour être engagée dans la fusée de roue (12), et **en ce que** le tachymètre (30) et l'organe de transmission d'informations (82) sont reliés à ladite cloche.

4. Ensemble selon l'une quelconque des revendications précédentes, **caractérisé en ce que** le stator du tachymètre comporte au moins un conduit (124) de passage de conducteurs (122) assurant la liaison de l'organe de transmission d'informations (82) aux bornes de connexion (114B) du connecteur (110).

5. Ensemble selon l'une quelconque des revendications précédentes, **caractérisé en ce qu'**il comporte un tube rapporté blindé (128) de protection mécanique et électromagnétique de conducteurs (122) assurant la liaison de l'organe de transmission d'informations (82) aux bornes de connexion (114B) du connecteur, lequel tube s'étend généralement le long du stator (32).

## Claims

1. A wheel assembly comprising a vehicle wheel (14), a pressure sensor being mounted on the wheel, a wheel axle (12) carrying the wheel (14), and an equipment for measuring the speed of rotation of the wheel comprising a tachometer (30) having a stator (32) secured to the wheel axle (12), a rotor (34) rotated by the wheel (14), and a connector (110) secured to the stator (32) for electrical connection of the tachometer, which connector (110) includes a set of connection terminals (114A), the equipment further comprising an information transmission member (82) carried by the stator (32) of the tachometer and suitable for co-operating with a complementary information transmission member (74) constrained to rotate with the wheel (14), **characterized in that** said tachometer connector (110) includes additional connection terminals (114B) to which said information transmission member (82) is connected to transmit said information, and **in that** said information transmitted by the information transmission member (82) are pressure information which represent the pressure measured by the pressure sensor.

2. Wheel assembly according to claim 1, wherein the information transmission member (82) is secured to the tachometer (30) to form a unitary module, and wherein the equipment includes means (84, 105) for fixing the unitary module to the wheel axle (12).

3. Wheel assembly according to claim 2, wherein said means for fixing the unitary module to the wheel axle comprise a bell (84) adapted to be engaged in the wheel axle (12), and wherein the tachometer (30) and the information transmission member (82) are connected to said bell.

4. Wheel assembly according to any of the preceding claims, wherein the tachometer stator includes at least one duct (124) for passing conductors (122) to provide the connection between the information transmission member (82) and the connection terminals (114B) of the connector (110).

5. Wheel assembly according to any of the preceding claims, the equipment having fitted thereto a shielded tube (128) providing mechanical and electromechanical protection to conductors (122) providing the connection between the information transmission member (82) and the connection terminals (114B) of the connector, which tube extends generally along the stator (32).

## Patentansprüche

1. Radanordnung, umfassend ein Fahrzeugrad (14), einen an dem Rad montierten Drucksensor, einen das Rad (14) tragenden Radträger (12) und eine Ausrüstung zur Messung der Rotationsgeschwindigkeit des Rades, die einen Tachometer (30) mit einem an dem Radträger (12) befestigten Stator (32), einem Rotor (34), der von dem Rad (14) zur Drehung angetrieben wird, und einem mit dem Stator (32) verbundenen Verbindungselement (110) für die elektrische Verbindung des Tachometers, wobei das Verbindungselement (110) eine Verbindungsklemmenanordnung (114A) umfasst, wobei die Ausrüstung außerdem ein Organ (82) zur Übertragung von Informationen, das von dem Stator (32) des Tachometers getragen wird und geeignet ist, mit einem komplementären Organ (74) zur Übertragung von Informationen zusammenzuarbeiten, das drehfest mit dem Rad (14) verbunden ist, **dadurch gekennzeichnet, dass** das Verbindungselement (110) des Tachometers zusätzliche Verbindungsklemmen (114B) aufweist, an das das Organ (82) zur Übertragung von Informationen angeschlossen ist, um diese Informationen zu übertragen, und dass die von dem Organ (82) zur Übertragung von Informationen übertragenen Informationen Druckinformationen sind, die den von dem Drucksensor gemessenen Druck darstellen.

2. Anordnung nach Anspruch 1, **dadurch gekennzeichnet, dass** das Organ (82) zur Informationsübertragung mit dem Tachometer (30) verbunden ist, um ein Einheitsmodul zu bilden, und dass sie Mittel (84, 105) zur Befestigung des Einheitsmoduls an dem Radträger (12) aufweist.

3. Anordnung nach Anspruch 2, **dadurch gekennzeichnet, dass** die Mittel zur Befestigung des Einheitsmoduls an dem Radträger eine Glocke (84) umfasst, die angepasst ist, um in den Radträger (12) einzugreifen, und dass der Tachometer (30) und das Organ (82) zur Informationsübertragung mit der Glocke verbunden sind.

4. Anordnung nach einem beliebigen der vorhergehenden Ansprüche, **dadurch gekennzeichnet, dass** der Stator des Tachometers mindestens einen Kanal (124) für die Durchführung von Leitungen (122) aufweist, die die Verbindung des Organs (82) zur Informationsübertragung mit den Verbindungsklemmen (114B) des Verbindungselements (110) sicherstellen.

5. Anordnung nach einem beliebigen der vorhergehenden Ansprüche, **dadurch gekennzeichnet, dass** sie ein angesetztes, abgeschirmtes Rohr (128) zum mechanischen und elektromagnetischen Schutz der Leitungen (122) aufweist, das die Verbindung des Organs (82) zur Informationsübertragung mit den Verbindungsklemmen (114B) des Verbindungselements sicherstellt, wobei das Rohr sich im Ganzen gesehen längs des Stators (32) erstreckt.
